# FASCICULE DE BREVET EUROPEEN

(11) **EP 2 627 682 B1**
(45) Date de publication et mention de la délivrance du brevet: **13.05.2015**
(21) Numéro de dépôt: 11764755.2
(22) Date de dépôt: 06.10.2011
(51) Int. Cl.: C08F 214/18, C08F 216/12, C08J 5/22, H01M 8/10

(54) **COPOLYMERES HALOGENES COMPRENANT AU MOINS UN MOTIF REPETITIF VINYLETHER PORTEUR D'UN GROUPE PENDANT CARBONATE**
HALOGENIERTE COPOLYMERE MIT MINDESTES EINER VINYLETHER-WIEDERHOLUNGSEINHEIT MIT EINER CARBONATSEITENGRUPPE
HALOGENATED COPOLYMERS COMPRISING AT LEAST ONE VINYL ETHER REPEAT UNIT BEARING A CARBONATE PENDENT GROUP

(30) Priorité: 11.10.2010 FR 1058230
(43) Date de publication de la demande: 21.08.2013
(73) Titulaire: Commissariat à l'Énergie Atomique et aux Énergies Alternatives, 75015 Paris (FR); Centre National de la Recherche Scientifique, 75016 Paris (FR)
(72) Inventeur: GALIANO, Hervé, F-37700 La Ville-aux-dames (FR); AMEDURI, Bruno, F-34000 Montpellier (FR); BOUTEVIN, Bernard, F-34090 Montpellier (FR); ALAAEDDINE, Ali, LIBAN (LB)
(74) Mandataire: Ilgart, Jean-Christophe
(86) Numéro de dépôt international: PCT/EP2011/067495
(87) Numéro de publication internationale: WO 2012/049070

(56) Documents cités:
- US-A- 5 798 417
- US-A1- 2004 097 677

## Description

### DOMAINE TECHNIQUE

La présente invention a trait à des copolymères halogénés originaux comprenant, entre autres, comme motif répétitif au moins un motif répétitif spécifique comprenant au moins un groupe pendant carbonate.

Ces copolymères présentent de bonnes propriétés de conduction ionique, en particulier, en ce qui concerne les ions lithium et de bonnes propriétés physiques, que ce soit en termes de thermostabilité, de capacité à être mis sous forme de films, d'inertie chimique et/ou de stabilité électrochimique.

C'est donc tout naturellement que ces copolymères peuvent entrer dans la constitution de membranes conductrices d'ions, en particulier, d'ions lithium, ces membranes pouvant être notamment incorporées dans des générateurs au lithium.

Ces copolymères peuvent donc trouver leur application dans le domaine des équipements portables utilisant ces générateurs au lithium pour leur fonctionnement, ce qui est le cas, en particulier, des caméscopes, des ordinateurs ou encore des téléphones mobiles.

### ÉTAT DE LA TECHNIQUE ANTÉRIEURE

Les générateurs électrochimiques au lithium fonctionnent sur le principe d'insertion/désinsertion (ou intercalation/désintercalation) simultanée de lithium au sein des électrodes positive et négative.

Plus précisément, la réaction électrochimique à l'origine de la production de courant met en jeu le transfert, par l'intermédiaire d'un électrolyte conducteur d'ions lithium, de cations lithium provenant d'une électrode négative qui viennent s'intercaler dans le réseau accepteur de l'électrode positive, les ions lithium transitant par un électrolyte conducteur d'ions lithium.

Généralement, l'électrode négative est à base d'un matériau carboné, tel que du graphite, et est le siège d'une réaction d'intercalation du lithium, en processus de charge.

L'électrode positive, quant à elle, est, classiquement, à base d'un oxyde de métal de transition lithié (le métal pouvant être, par exemple, du cobalt, du nickel, du manganèse) et est le siège d'une réaction de désintercalation du lithium, en processus de charge.

Un séparateur assure la séparation physique entre l'électrode négative et l'électrode positive. Il comporte classiquement un film microporeux, par exemple en polyoléfine tel que le polyéthylène, le polypropylène, d'une épaisseur pouvant aller de 20 à 25 µm, lequel film microporeux est imprégné d'un électrolyte liquide.

L'électrolyte liquide doit assurer la conduction des ions lithium de l'électrode positive vers l'électrode négative lors du processus de charge et vice versa lors du processus de décharge (c'est-à-dire en processus de fonctionnement). Cet électrolyte se présente classiquement sous la forme d'un sel de lithium dissous dans un solvant organique, généralement de la famille des carbonates.

Ce type d'électrolyte présente une forte sensibilité à l'eau. Les accumulateurs les comprenant doivent donc être assemblés dans des conditions drastiques, avec un fort contrôle de l'humidité ambiante, ce contrôle s'opérant classiquement dans des salles blanches.

Qui plus est, les électrolytes à base de solvant organique présentent une conductivité très limitée (de l'ordre de 10⁻² S/cm) et nécessite, de ce fait, l'utilisation en tant que support, de films microporeux très fins, afin de limiter la résistance électrolytique de l'accumulateur, laquelle est proportionnelle au produit de l'épaisseur du film et de l'inverse de la conductivité.

Ainsi, les accumulateurs de lithium fonctionnant avec un électrolyte à base de solvant organique présentent des performances relativement limitées en puissance.

Pour palier les inconvénients liés à l'utilisation d'électrolytes liquides, une solution peut consister à utiliser des électrolytes solides constituant intrinsèquement de bons conducteurs d'ions lithium, qui permettent une conductivité de ces ions à des températures élevées.

Le document US 2004/097677 décrit des copolymères comprenant au moins deux types d'unités différentes (P1 et P2), P1 étant une unité dérivée du chlorotrifluoroéthylène (CTFE) ou du tétrafluoroéthylène (TFE) et P2 étant une unité dérivée d'un vinylène carbonate de formule suivante :

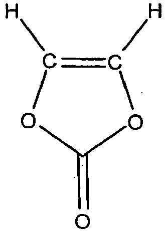

Ces copolymères ont pour vocation, compte tenu de leurs propriétés de transparence, d'entrer dans la constitution de guides d'ondes.

Le document US 5 798 417 a trait à des polymères comprenant une chaîne principale du type polyoléfine greffée par des chaînes pendantes résultant de la polymérisation d'au moins un monomère fluorée de formule suivante :

F₂C=CFO[CF₂CF(CF₃)O]ₙ[CF₂]ₘX

dans laquelle :
- X est -SO₂Y, -CN, -COF ou -CO₂Y', n est égal 0 ou va de 1 à 6, m va de 1-3 ;
- Y est F, OM ou OH et Y' est H, R' ou M ;
- R' est un groupe alkyle en C₁-C₈, et
- M est un métal alcalin, un groupe ammonium éventuellement quaternisé.

C'est ainsi que les auteurs de la présente invention ont mis point de nouveaux copolymères présentant toutes les caractéristiques nécessaires pour constituer des électrolytes solides conducteurs d'ions lithium, à savoir une bonne conductivité aux ions lithium ainsi qu'une inertie chimique et physique (notamment une bonne thermostabilité).

### EXPOSÉ DE L'INVENTION

Ainsi, l'invention a trait à des copolymères selon les revendications 1 à 11 comprenant au moins un motif répétitif de formule (I) suivante : 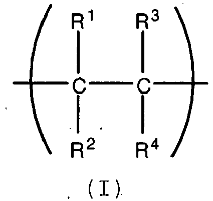 dans laquelle :
- R¹, R², R³ et R⁴ représentent, indépendamment l'un de l'autre, un atome d'hydrogène, un atome d'halogène, un groupe perfluoroalkyle ou un groupe perfluoroalcoxy, à condition que l'un au moins des groupes R¹ à R⁴ représente un atome d'halogène, un groupé perfluoroalkyle ou un groupe perfluoroalcoxy,
   et comprenant au moins un motif répétitif de formule (II) suivante : 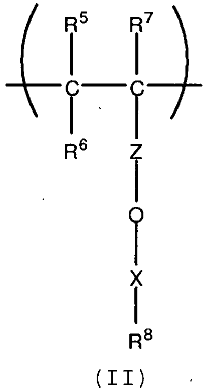 dans laquelle :
   - R⁵, R⁶, R⁷ représentent, indépendamment l'un de l'autre, un atome d'hydrogène, un groupe alkyle ;
   - Z est une liaison simple ou un groupe alkylène ;
   - X est un groupe alkylène ou un groupe perfluoralkylène ; et
   - R⁸ est un groupe carbonate cyclique.

Avant d'entrer plus en détail dans la description, nous précisons les définitions suivantes.

Par groupe alkyle, on entend classiquement, dans ce qui précède et ce qui suit, un groupe alkyle linéaire ou ramifié de formule -CₙH₂ₙ₊₁, n correspondant au nombre d'atomes de carbone, ce nombre pouvant aller de 1 à 5, un tel groupe pouvant être un groupe méthyle.

Par groupe perfluoroalkyle, on entend classiquement, dans ce qui précède et ce qui suit, un groupe alkyle dont tous les atomes d'hydrogène sont remplacés par des atomes de fluor, ce groupe répondant à la formule -CₙF₂ₙ₊₁, n correspondant au nombre d'atomes de carbone, ce nombre pouvant aller de 1 à 5, un tel groupe pouvant être un groupe de formule -CF₃.

Par groupe perfluoroalcoxy, on entend, classiquement, dans ce qui précède et ce qui suit, un groupe -O-alkyle dont tous les atomes d'hydrogène sont remplacés par des atomes de fluor, ce groupe répondant à la formule -O-CₙF₂ₙ₊₁, n correspondant au nombre d'atomes de carbone, ce nombre pouvant aller de 1 à 5, un tel groupe pouvant être un groupe de formule -O-CF₃.

On précise que, par groupe alkylène, on entend classiquement un groupe alkyle formant un pont entre deux autres groupes, c'est-à-dire dont deux atomes d'hydrogène sont substitués pour former ledit pont, un exemple de groupe alkylène pouvant être un groupe méthylène de formule -CH₂- ou un groupe éthylène de formule -CH₂-CH₂-.

Par liaison simple, on entend le fait que l'atome de carbone porteur du groupe R⁷ est directement lié à l'atome d'oxygène de la formule (II) susmentionnée.

Par groupe perfluoroalkylène, on entend, classiquement, dans ce qui précède et ce qui suit, un groupe alkylène tel que défini ci-dessus, dont tous les atomes d'hydrogène sont remplacés par des atomes de fluor, un exemple de groupe perfluoroalkylène pouvant être un groupe perfluoroéthylène de formule -CF₂-CF₂-.

Par groupe carbonate cyclique, on entend un groupe carbonate comprenant un motif -O-CO-O- pris dans un cycle, un exemple de groupe carbonate cyclique pouvant être un groupe répondant à l'une des formules (III) ou (IV) suivantes : 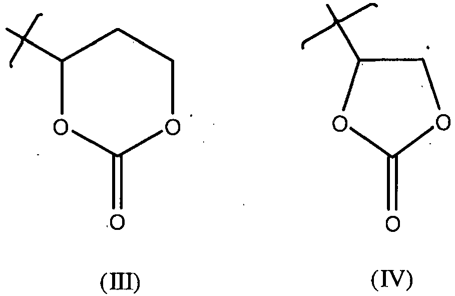 l'accolade indiquant l'endroit par lequel les groupes ci-dessus sont liés au groupe X de la formule (II) susmentionnée.

Grâce à la présence simultanée au sein des copolymères d'au moins un motif répétitif de formule (I) et d'au moins un motif répétitif de formule (II), les copolymères de l'invention présentent une bonne résistance thermique, notamment dans une large gamme de températures (telle qu'une gamme de températures s'échelonnant de -25 à 150°C), une bonne inertie chimique et une bonne stabilité à faible et haut potentiel (notamment sur une large gamme de potentiels électrochimiques, telle qu'une fenêtre électrochimique allant de -3 à +5 V), une bonne capacité à être mis sous forme de film tout en présentant des propriétés conductrices aux ions lithium grâce notamment à la présence des groupes pendants carbonate cyclique, ces copolymères satisfaisant ainsi au cahier des charges souhaité pour les électrolytes solides destinés à entrer dans la constitution de générateurs au lithium.

Selon l'invention, selon un mode de réalisation particulier, concernant le motif répétitif de formule (I), au moins deux des groupes R¹ à R⁴ peuvent représenter, avantageusement des atomes de fluor.

Selon un mode particulier de réalisation de l'invention, R¹ à R⁴ peuvent représenter un atome de fluor, auquel cas le motif répétitif est un motif issu de la polymérisation du tétrafluoréthylène.

Selon un autre mode de réalisation, trois des groupes R¹ à R⁴ peuvent représenter un atome de fluor, tandis que le quatrième groupe peut représenter un atome d'hydrogène, un atome d'halogène autre que le fluor, un groupe perfluoroalkyle ou un groupe perfluoroalcoxy.

Ainsi, par exemple, R¹ à R³ peuvent représenter un atome de fluor et R⁴ peut représenter un atome d'hydrogène, un atome de chlore, un groupe perfluorométhyle, un groupe perfluorométhoxy, un groupe perfluoroéthoxy ou un groupe perfluoropropoxy, un tel motif répondant à la formule (V) suivante : 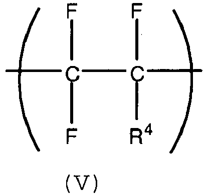 dans laquelle R⁴ représente un atome d'hydrogène, un atome de chlore, un groupe perfluorométhyle, un groupe perfluorométhoxy, un groupe perfluoroéthoxy ou un groupe perfluoropropoxy.

Selon encore un autre mode de réalisation, deux des groupes R¹ à R⁴ (par exemple, R¹ et R³ peuvent représenter un atome de fluor, un groupe (par exemple, R²) peut représenter un atome d'hydrogène tandis que le dernier groupe (par exemple R⁴) peut représenter un atome d'hydrogène, un atome de chlore, un groupe perfluorométhyle, un groupe perfluorométhoxy, un groupe perfluoroéthoxy ou un groupe perfluoropropoxy.

Selon un mode particulier de l'invention, concernant le motif répétitif de formule (II), Z est liaison simple, auquel cas le motif répond à la formule (VI) suivante : 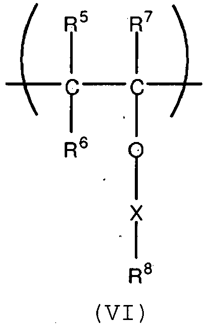 dans laquelle R⁵, R⁶, R⁷, R⁸ et X sont tels que définis ci-dessus.

En particulier, R⁵ à R⁷ peuvent représenter un atome d'hydrogène et X un groupe alkylène, tel qu'un groupe -CH₂-.

Un motif répétitif répondant à la définition ci-dessus peut répondre à la formule (VII) suivante : 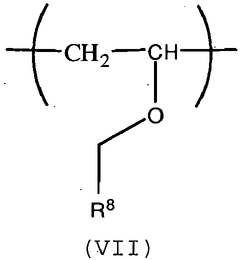 avec R⁸ pouvant correspondre à un groupe carbonate cyclique, tel qu'un groupe de formules (III) ou (IV) définies ci-dessus, et en particulier, un groupe de formule (IV), auquel cas le motif peut répondre à l'une des formules (VIII) ou (IX) suivantes :

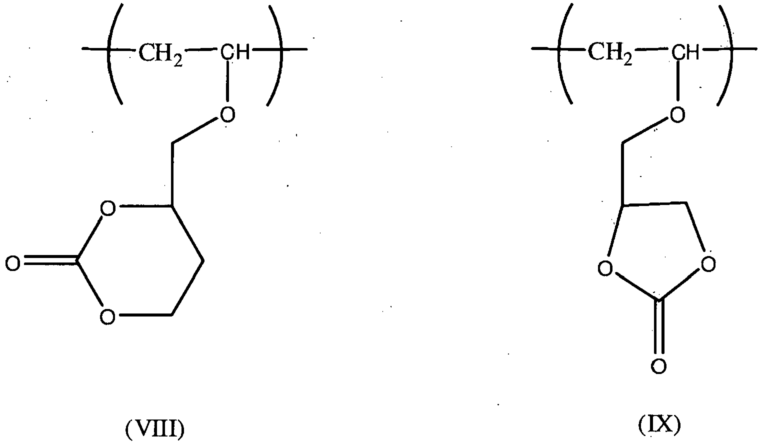

Ainsi, un copolymère particulier conforme à l'invention est un copolymère comprenant, comme motif répétitif particulier de formule (I), au moins un motif répétitif de formule (V) suivante : 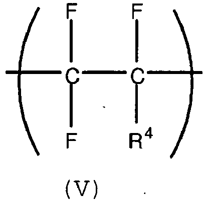 dans laquelle R⁴ représente un atome de chlore, un groupe perfluorométhyle ou un groupe perfluorométhoxy et
comme motif répétitif particulier de formule (II), au moins un motif répétitif de formule (IX) suivante :

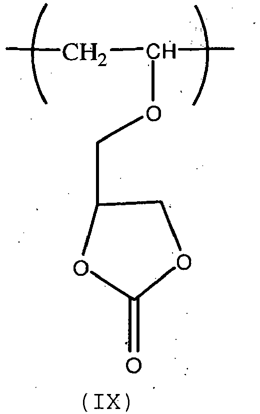

Les copolymères de l'invention peuvent comprendre de 40 à 95 % molaire de motif répétitif de formule (I) et de 5 à 60% molaire de motif répétitif de formule (II).

La masse molaire des copolymères de l'invention peut aller de 800 à 50000 g.mol⁻¹.

Les copolymères de l'invention peuvent être des copolymères alternés, c'est-à-dire avec une alternance dans le squelette d'au moins un motif répétitif de formule (I) et d'au moins un motif de formule (II).

Dans ce cas, le copolymère comportera, classiquement, 50% molaire de motif répétitif de formule (I) et 50% molaire de motif répétitif de formule (II).

Les copolymères de l'invention peuvent être obtenus par un procédé de polymérisation, en particulier par un procédé de polymérisation radicalaire comprenant une étape de polymérisation en présence d'un amorceur de radicaux libres et d'au moins un monomère de formule (X) suivante : 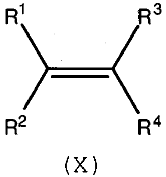 et d'au moins un monomère de formule (XI) suivante : 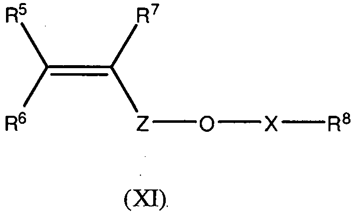 dans lesquelles les R¹, R², R³, R⁴, R⁵, R⁶, R⁷, R⁸, X et Z sont tels que définis ci-dessus.

Un amorceur de radicaux libres efficace dans le cadre dé ce procédé peut être choisi parmi les dérivés peroxypivalates, tels que le peroxypivalate de tert-butyle (intitulé TBPPi) ou de *tert*-amyle, des dérivés peroxydes tels que le peroxyde de ditertbutyle ou de benzoyle, des dérivés sulfates tels que le persulfate de sodium ou d'ammonium.

En particulier, un amorceur de radicaux libres particulièrement approprié à la mise en oeuvre de ce procédé peut être un dérivé peroxypivalate, tel que le peroxypivalate de tert-butyle.

L'étape de polymérisation s'effectue, de préférence, dans un solvant polaire aprotique, lequel peut être choisi parmi les solvants suivants :
- le diméthylformamide (DMF) ;
- l'acétonitrile ;
- un solvant halogéné tel que le 1,1,2-trifluoro-1,2,2-trichloroéthane, le 1,1,1,3,3-pentafluorobutane, le pentafluorohexane, le pentafluoroheptane, le perfluorobenzène, le perfluoro-1-butyltétrahydrofurane ;
- le tétrahydrofurane ;
- l'eau, et
- les mélanges de ceux-ci.

Dans le cas où les monomères utilisés existent sous forme gazeuse (ce qui est le cas notamment du monomère chlorotrifluoroéthylène) et que la réaction se déroule sous pression, celle-ci peut être mise en oeuvre dans un autoclave.

Pour les monomères de formule (X), au moins deux des groupes R¹ à R⁴ peuvent représenter, avantageusement des atomes de fluor.

En particulier, R¹ à R⁴ peuvent représenter des atomes de fluor, auquel cas le monomère est le tétrafluoroéthylène.

Plus particulièrement encore, trois des groupes R¹ à R⁴ peuvent représenter un atome de fluor, tandis que le quatrième groupe peut représenter un atome d'hydrogène, un atome d'halogène autre que le fluor, un groupe perfluoroalkyle ou un groupe perfluoroalcoxy.

Des monomères conformes à cette spécificité peuvent être des monomères répondant à la formule (XII) suivante : 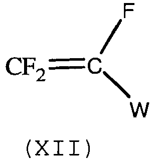 dans laquelle W représente un atome d'hydrogène, Cl, -CF₃ , -OCF₃, -O-CF₂-CF₃ ou -O-CF₂-CF₂-CF₃ ces monomères étant ainsi respectivement, le trifluoroéthylène, le chlorotrifluoroéthylène (connu sous l'abréviation CTFE), l'hexafluoropropène (connu sous l'abréviation HFP), le perfluorométhylvinyléther (connu sous l'abréviation PMVE), le perfluoroéthylvinyléther et le perfluoropropylvinyléther. Ces monomères sont disponibles dans le commerce.

Concernant les monomères de formule (XI), Z peut être une liaison simple.

En particulier, R⁵ à R⁷ peuvent représenter un atome d'hydrogène et X un groupe alkylène, tel qu'un groupe -CH₂-.

Un monomère conforme à cette spécificité peut répondre à la formule (XII) suivante :

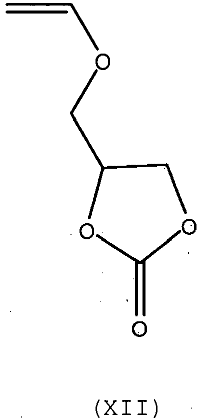

Les monomères de formule (X) accepteurs d'électrons et les monomères de formule (XI) donneurs d'électrons peuvent classiquement réagir ensemble pour donner des copolymères alternés.

Les monomères de formule (XI) peuvent être préparés par une étape de transethérification consistant à mettre en contact un composé de formule (XIII) suivante :

HO-X-R⁸ (XIII)

avec un composé de formule (XIV) suivante : 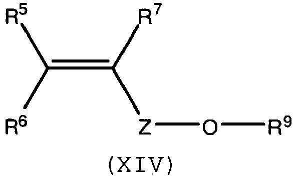 dans laquelle R⁵, R⁶, R⁷, R⁸ et Z, sont tels que définis ci-dessus et R⁹ est un groupe alkyle.

Cette étape de transethérification peut être réalisée en présence d'un catalyseur à base de palladium, tel qu'un catalyseur acétate de (1,10-phénanthroline)palladium (II) dans un solvant halogéné, tel que le dichlorométhane. Elle peut être réalisée également en présence d'un catalyseur à base d'un autre métal que le palladium (tel que le cobalt, le mercure).

En particulier, lorsqu'il s'agit de préparer un copolymère comprenant, comme motif répétitif, un motif répétitif de formule (V) suivante : 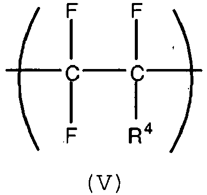 R⁴ correspondant à un atome d'hydrogène, un atome de chlore, un groupe perfluorométhyle ou un groupe perfluorométhoxy, un groupe perfluoroéthoxy ou un groupe perfluoropropoxy, et, comme motif répétitif, un motif répétitif de formule (IX) suivante : 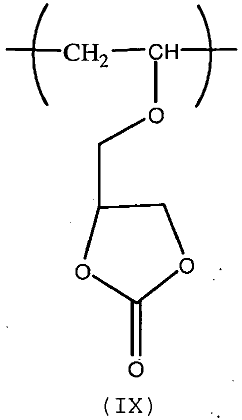 les monomères mis en jeu, dans le cadre de la préparation de ce copolymère, sont des monomères répondant aux formules respectives suivantes :

CF₂=CFR⁴

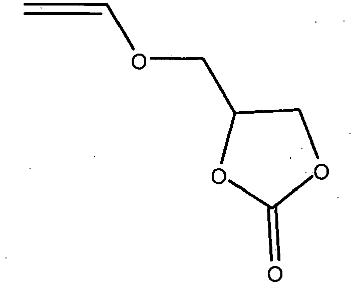

ce dernier monomère étant connu comme étant l'éther vinylique de carbonate de glycérine (ou encore comme étant le (2-oxo-1,3-dioxolan-4-yl) méthylvinyléther), et R⁴ étant tel que défini ci-dessus.

Après l'étape de polymérisation, le procédé de l'invention peut comprendre une étape d'isolement du copolymère du milieu réactionnel, cette étape d'isolement pouvant consister à ajouter au milieu brut réactionnel un solvant de précipitation, tel que du pentane froid suivi d'une filtration du précipité obtenu.

Les copolymères selon l'invention présentent, entres autres propriétés, une bonne conduction aux ions lithium.

C'est donc tout naturellement qu'ils peuvent entrer dans la constitution d'un électrolyte conducteur d'ions lithium destiné à des générateurs au lithium.

Ainsi, l'invention a trait également à une membrane, par exemple une membrane électrolytique, comprenant au moins un copolymère tel que décrit ci-dessus.

Les membranes peuvent être préparées de manière classique, par exemple, par coulée, c'est-à-dire que le copolymère est mis en solution dans un solvant adéquat, tel que de l'acétone, de la méthyléthylcétone puis appliqué sur une surface plane, par exemple une plaque de verre ou en polytétrafluoroéthylène, à l'aide d'un dispositif, tel qu'un applicateur à main.

Le copolymère formant un film humide est ensuite séché pour former un film d'épaisseur adéquate, par exemple de 15 à 150 µm, puis décollé du substrat.

La présente invention a également pour objet un générateur au lithium comprenant au moins une cellule électrochimique, chacune d'elles comprenant au une membrane telle que définie ci-dessus disposée entre une électrode positive et une électrode négative.

Par électrode positive, on entend, classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

Par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

Généralement, l'électrode négative peut être à base d'un matériau carboné, tel que du graphite, et est le siège d'une réaction d'intercalation du lithium, en processus de charge.

L'électrode positive, quant à elle, peut être à base d'un oxyde de métal de transition lithié (le métal pouvant être, par exemple, du cobalt, du nickel, du manganèse) et est le siège d'une réaction de désintercalation du lithium, en processus de charge.

L'invention va maintenant être décrite, en référence aux exemples suivants, donnés à titre indicatif et non limitatif.

### EXPOSÉ DÉTAILLÉ DE MODES DE RÉALISATION PARTICULIERS

### EXEMPLE 1

Cet exemple a trait à la préparation du (2-oxo-1,3-dioxolan-4-yl) méthylvinyléther de formule suivante :

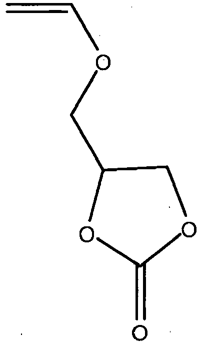

Le protocole de préparation de ce composé est le suivant.

Dans un tube de Schlenk, de l'acétate de palladium (760 mg ; 3,38 mmol) est solubilisé dans du dichlorométhane (10 mL). Une solution de (1,10) phénanthroline (916 mg ; 5,08 mmol) dans du dichlorométhane (10 mL) y est ensuite ajoutée. Lé milieu réactionnel est agité à température ambiante pendant 30 minutes pour générer *in situ* le catalyseur de palladium (en l'occurrence, le (1,10-phénanthroline) palladium (II)). Une solution de carbonate de glycérol (20 g ; 0,169 mol) et l'éthylvinyléther (73,33 g ; 1,01 mol) est ajoutée à la solution puis le mélange réactionnel est introduit dans un autoclave. Le mélange réactionnel est ensuite chauffé à 60°C pendant 24 heures. Le dichlorométhane et l'éthylvinyléther sont ensuite évaporés sous vide. Le produit est solubilisé dans 200 mL de dichlorométhane et 200 mL d'eau sont ensuite ajoutés. Le mélange réactionnel est ensuite extrait 3 fois avec le dichlorométhane (2*200 mL). La phase organique est séchée sur du Na₂SO₄, filtrée et le solvant organique est évaporé sous vide. Le produit obtenu se présente sous forme d'un liquide jaune (soit un rendement de 45%).

### EXEMPLE 2

Cet exemple illustre la préparation d'un copolymère conforme à l'invention selon le schéma réactionnel suivant :

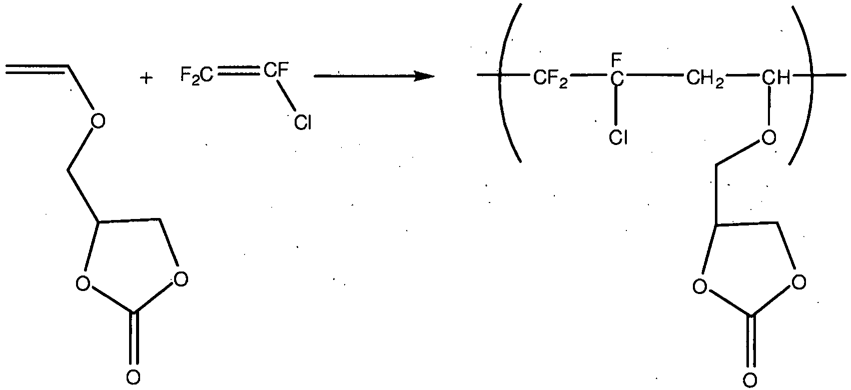

Ainsi, les monomères utilisés dans le cadre de cet exemple sont respectivement :
*le chlorotrifluoroéthylène de formule suivante :

   CF₂=CFCl

   intitulé, par la suite, CTFE ; et
*le (2-oxo-1,3-dioxolan-4-yl) méthylvinyléther de formule suivante : 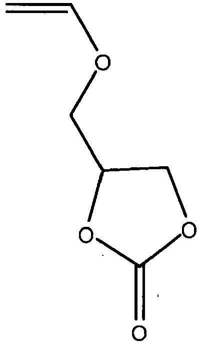
préparé selon l'exemple 1 ci-dessus.

Le CTFE se présente sous forme gazeuse, ce qui nécessite l'utilisation d'un autoclave pour mettre en oeuvre cette étape.

L'autoclave est muni d'un agitateur mécanique, de deux vannes (une vanne d'entrée et une vanne de sortie de gaz), d'un disque de sécurité et d'un manomètre de précision.

Dans un premier temps, on introduit dans l'autoclave du K₂CO₃ sous forme de poudre (161 mg ; 1,16 mmol) suivi d'une mise sous pression de l'autoclave (30 bars d'azote). Une fois l'azote évacué, le réacteur est placé sous vide pendant environ 30 minutes, puis il est introduit le CTFE (13,5 g ; 0,116 mol), du peroxypivalate de tert-butyle (1,80 g ; 7,76 mmol) (à raison de 5% molaire par rapport à l'ensemble des monomères), le 1,1,1,3,3-pentafluorobutane (50 mL) et le (2-oxo-1,3-dioxolan-4-yl) méthylvinyl éther préparé préalablement (5,6 g ; 0,0338 mol).

L'autoclave est ensuite placé sous agitation et chauffé progressivement jusqu'à 74°C pendant environ 14 heures. Le produit de cette réaction est ensuite précipité dans le méthanol et placé sous vide à 50°C en vue d'un séchage, moyennant quoi l'on obtient à l'issue du séchage une poudre blanche.

Le rendement de la réaction est de 85%.

La masse molaire moyenne en nombre et l'indice de polymolécularité, tous deux évalués par chromatographie en phase gazeuse avec des étalons polystyrène ont été estimés respectivement à 4200 g.mol⁻¹ et à 1,90.

Le copolymère obtenu a également été analysé par RMN ¹H et RMN ¹⁹F.

L'analyse RMN ¹H montre l'absence des signaux centrés à 6,4, 4,8 et 4,05 ppm caractéristiques des protons éthyléniques du (2-oxo-1,3-dioxolan-4-yl) méthylvinyléther, ce qui atteste de l'incorporation de ce monomère dans le copolymère.

Les signaux des protons des groupes -CF-CH₂-et -CH- de la chaîne principale apparaissent respectivement à 2,51 et 3,29 ppm et à 4,75 et 4,90 ppm.

Les signaux des protons des groupes -O-CH₂-adjacents à la chaîne principale apparaissent respectivement à 4,07 et 4,26 ppm.

L'analyse RMN ¹⁹F montre la présence de signaux à -107,24 et -117,77 ppm attribuables aux groupes -CF₂-, à -133,60 ppm attribuable aux groupes -CF-.

Le spectre RMN ¹⁹F montre l'absence de signaux de groupes -CF₂- de la diade -CF₂-CFCl-CF₂-CFCl-, ce qui montre que les copolymères obtenus sont des copolymères alternés.

### EXEMPLE 3

Cet exemple illustre la préparation d'un copolymère conforme à l'invention selon le schéma réactionnel suivant :

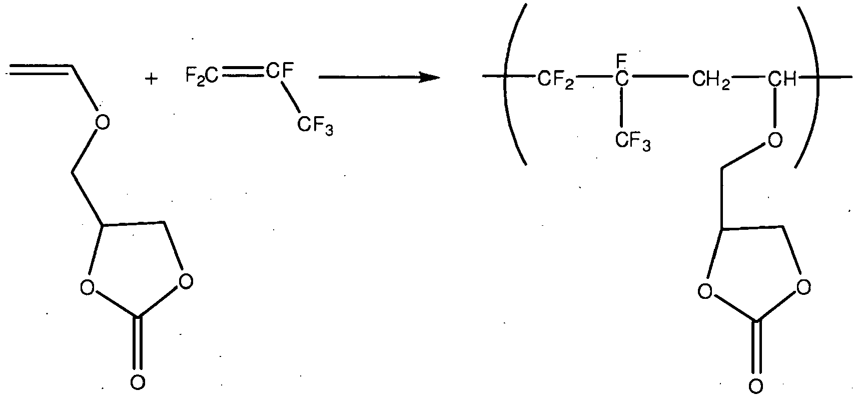

Ainsi, les monomères utilisés dans le cadre de cet exemple sont respectivement :
*l'hexafluoropropène de formule suivante :

   CF₂=CFCF₃

   intitulé, par la suite, HFP ; et
*le (2-oxo-1,3-dioxolan-4-yl) méthylvinyléther de formule suivante : 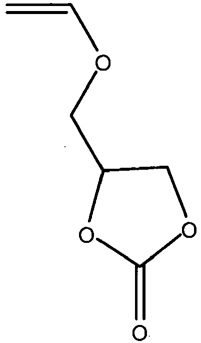
préparé selon l'exemple 1.

La copolymérisation est réalisée dans un autoclave.

L'autoclave est muni d'un agitateur mécanique, de deux vannes (une vanne d'entrée et une vanne de sortie de gaz), d'un disque de sécurité et d'un manomètre de précision.

Dans un premier temps, on introduit dans l'autoclave du K₂CO₃ sous forme de poudre (138 mg ; 1 mmol) suivi d'une mise sous pression de l'autoclave (30 bars d'azote). Une fois l'azote évacué, le réacteur est placé sous vide pendant environ 30 minutes, puis il est introduit le HFP (15 g ; 0,1 mol), du peroxypivalate de *tert*-butyle (1,54 g ; 6,66 mmol) (à raison de 5% molaire par rapport à l'ensemble des monomères), le 1,1,1,3,3-pentafluorobutane (50 mL) et le (2-oxo-1,3-dioxolan-4-yl) méthylvinyl éther (4,8 g ; 0,033 mol).

L'autoclave est ensuite placé sous agitation et chauffé progressivement jusqu'à 74°C pendant environ 14 heures. Le produit de cette réaction est ensuite précipité dans le méthanol et placé sous vide à 50°C en vue d'un séchage, moyennant quoi l'on obtient à l'issue du séchage une poudre blanche.

Le rendement de la réaction est de 73%.

La masse molaire moyenne en nombre et l'indice de polymolécularité, tous deux évalués par chromatographie en phase gazeuse avec des étalons polystyrène ont été estimés respectivement à 4600 g.mol⁻¹ et à 1,27.

Le copolymère obtenu a également été analysé par RMN ¹H et RMN ¹⁹F.

L'analyse RMN ¹H montre l'absence des signaux centrés à 6,4, 4,8 et 4,05 ppm caractéristiques des protons éthyléniques du (2-oxo-1,3-dioxolan-4-yl) méthylvinyléther, ce qui atteste de l'incorporation de ce monomère dans le copolymère.

Les signaux des protons des groupes -CF-CH₂-et -CH- de la chaîne principale apparaissent respectivement à 2,48 et 3,11 ppm et à 4,52 ppm.

Les signaux des protons des groupes -O-CH₂-adjacents à la chaîne principale apparaissent respectivement à 3,94 et 4,19 ppm.

L'analyse RMN ¹⁹F montre la présence de signaux à -107,27 et -120,85 ppm attribuables aux groupes -CF₂-, à -182,16 ppm attribuable aux groupes -CF- et à -74,94 ppm aux groupes -CF₃.

Le spectre RMN ¹⁹F montre l'absence de signaux de groupes -CF₂- de la diade -CF₂-CF(CF₃)-CF₂-CF(CF₃)-, ce qui montre que les copolymères obtenus sont des copolymères alternés.

### EXEMPLE 4

Cet exemple illustre la préparation d'un copolymère conforme à l'invention selon le schéma réactionnel suivant :

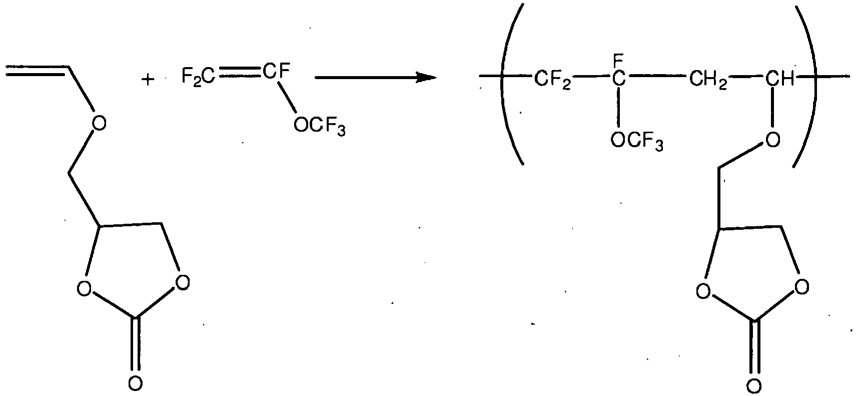

Ainsi, les monomères utilisés dans le cadre de cet exemple sont respectivement :
*le perfluorométhylvinyléther de formule suivante :

   CF₂=CFOCF₃

   intitulé, par la suite, PMVE ; et
*le (2-oxo-1,3-dioxolan-4-yl) méthylvinyléther de formule suivante : 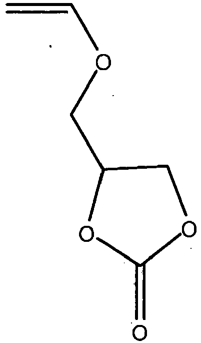
préparé selon l'exemple 1.

La copolymérisation est réalisée dans un autoclave.

L'autoclave est muni d'un agitateur mécanique, de deux vannes (une vanne d'entrée et une vanne de sortie de gaz), d'un disque de sécurité et d'un manomètre de précision.

Dans un premier temps, on introduit dans l'autoclave du K₂CO₃ sous forme de poudre (100 mg ; 0,72 mmol) suivi d'une mise sous pression de l'autoclave (30 bars d'azote). Une fois l'azote évacué, le réacteur est placé sous vide pendant environ 30 minutes, puis il est introduit le PMVE (16 g ; 0,097 mol), du peroxypivalate de tert-butyle (1,41 g ; 6, 07 mmol) (à raison de 5% molaire par rapport à l'ensemble des monomères), le 1,1,1,3,3-pentafluorobutane (50 mL) et le (2-oxo-1,3-dioxolan-4-yl) méthylvinyl éther (3,5 g ; 0,0243 mol).

L'autoclave est ensuite placé sous agitation et chauffé progressivement jusqu'à 74°C pendant environ 14 heures. Le produit de cette réaction est ensuite précipité dans le méthanol et placé sous vide à 50°C en vue d'un séchage, moyennant quoi l'on obtient à l'issue du séchage une poudre blanche.

Le rendement de la réaction est de 77%.

La masse molaire moyenne en nombre et l'indice de polymolécularité, tous deux évalués par chromatographie en phase gazeuse avec des étalons polystyrène ont été estimés respectivement à 3900 g.mol⁻¹ et à 1,85.

Le copolymère obtenu a également été analysé par RMN ¹H et RMN ¹⁹F.

L'analyse RMN ¹H montre l'absence des signaux centrés à 6,4, 4,8 et 4,05 ppm caractéristiques des protons éthyléniques du (2-oxo-1,3-dioxolan-4-yl) méthylvinyléther, ce qui atteste de l'incorporation de ce monomère dans le copolymère.

Les signaux des protons des groupes -CF-CH₂-et -CH- de la chaîne principale apparaissent respectivement à 2,65 et 3,08 ppm et à 4,57 ppm.

Les signaux des protons des groupes -O-CH₂-adjacents à la chaîne principale apparaissent respectivement à 3,99 et 4,22 ppm.

L'analyse RMN ¹⁹F montre la présence de signaux à -113,51 et -128,29 ppm attribuables aux groupes -CF₂-, à -135 et -146,92 ppm attribuables aux groupes -CF- et à -53,01 ppm aux groupes -CF₃.

Le spectre RMN ¹⁹F montre l'absence de signaux de groupes -CF₂- de la diade -CF₂-CF(OCF₃)-CF₂-CF(OCF₃)-, ce qui montre que les copolymères obtenus sont des copolymères alternés.

## Revendications

1. Copolymère comprenant au moins un motif répétitif de formule (I) suivante : 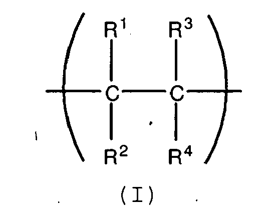 dans laquelle :
- R¹, R², R³ et R⁴ représentent, indépendamment l'un de l'autre, un atome d'hydrogène, un atome d'halogène, un groupe perfluoroalkyle ou un groupe perfluoroalcoxy, à condition que l'un au moins des groupes R¹ à R⁴ représente un atome d'halogène, un groupe perfluoroalkyle ou un groupe perfluoroalcoxy,
et comprenant au moins un motif répétitif de formule (II) suivante : 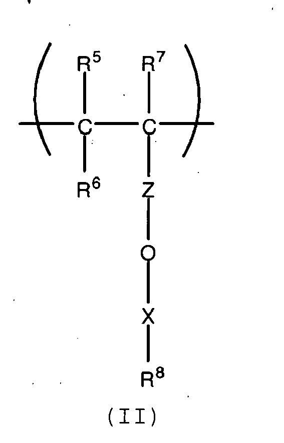 dans laquelle :
- R⁵, R⁶, R⁷ représentent, indépendamment l'un de l'autre, un atome d'hydrogène, un groupe alkyle ;
- Z est une liaison simple ou un groupe alkylène ;
- X est un groupe alkylène ou un groupe perfluoralkylène ; et
- R⁸ est un groupe carbonate cyclique.

2. Copolymère selon la revendication 1, dans lequel, concernant le motif répétitif de formule (I), au moins deux des groupes R¹ à R⁴ représentent des atomes de fluor.

3. Copolymère selon la revendication 1 ou 2, dans lequel R¹ à R⁴ représentent des atomes de fluor.

4. Copolymère selon la revendication 1 où 2, dans lequel, concernant le motif répétitif de formule (I), trois des groupes R¹ à R⁴ représentent un atome de fluor, tandis que le quatrième groupe représente un atome d'hydrogène, un atome d'halogène autre que le fluor, un groupe perfluoroalkyle ou un groupe perfluoroalcoxy.

5. Copolymère selon la revendication 4, dans lequel, concernant le motif répétitif de formule (I), R¹ à R³ représentent un atome de fluor et R⁴ représente un atome d'hydrogène, un atome de chlore, un groupe perfluorométhyle, un groupe perfluorométhoxy, un groupe perfluoroéthoxy ou un groupe perfluoropropoxy.

6. Copolymère selon l'une quelconque des revendications précédentes, dans lequel Z est une liaison simple, auquel cas, le motif répétitif de formule (II) répond à la formule (VI) suivante : 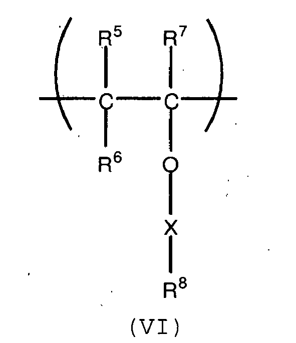 dans laquelle R⁵, R⁶, R⁷, R⁸ et X sont tels que définis à la revendication 1.

7. Copolymère selon l'une quelconque des revendications précédentes, dans lequel R⁸ répond à l'une des formules (III) ou (IV) suivantes :

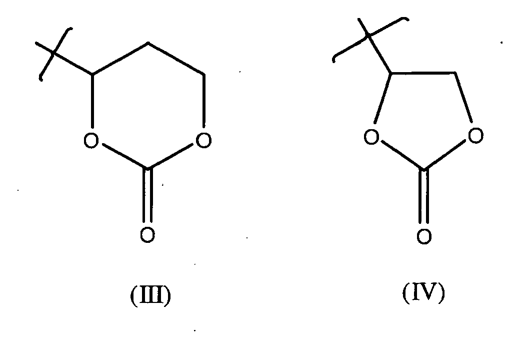

8. Copolymère selon l'une quelconque des revendications précédentes, dans lequel, concernant le motif répétitif de formule (II), R⁵ à R⁷ représentent un atome d'hydrogène et X est un groupe alkylène.

9. Copolymère selon l'une quelconque des revendications précédentes, comprenant, comme motif répétitif de formule (II), un motif répétitif répondant à l'une des formules (VIII) ou (IX) suivantes :

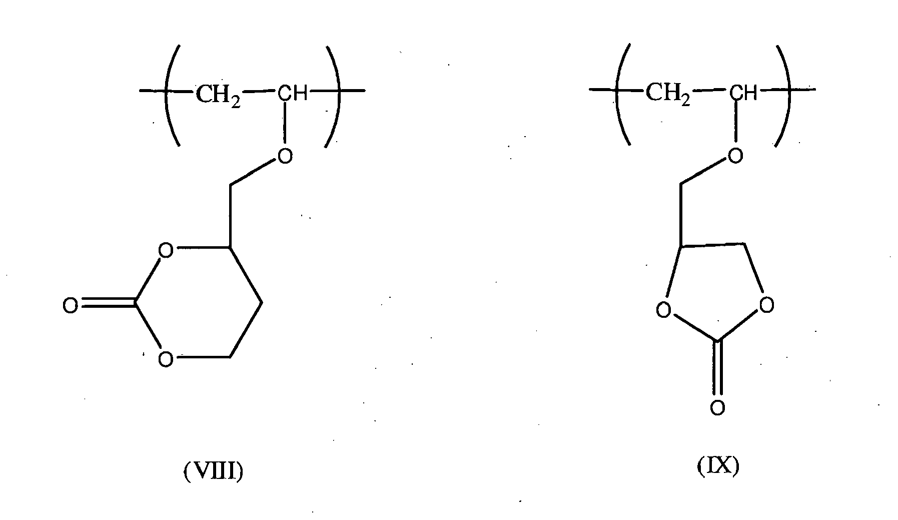

10. Copolymère selon l'une quelconque des revendications précédentes, comprenant, comme motif répétitif particulier de formule (I), au moins un motif répétitif de formule (V) suivante : 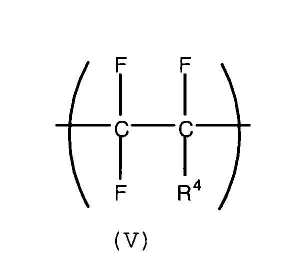 dans laquelle R⁴ représente un atome de chlore, un groupe perfluorométhyle ou un groupe perfluorométhoxy ; et
comme motif répétitif particulier de formule (II), au moins un motif répétitif de formule (IX) suivante :

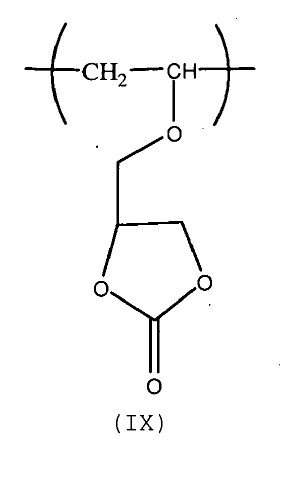

11. Copolymère selon l'une quelconque des revendications précédentes, qui est un copolymère alterné.

12. Procédé de préparation d'un copolymère comprenant au moins un motif répétitif de formule (I) suivante : 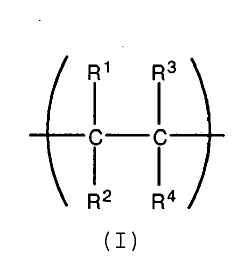 dans laquelle :
- R¹, R², R³ et R⁴ représentent, indépendamment l'un de l'autre, un atome d'hydrogène, un atome d'halogène, un groupe perfluoroalkyle ou un groupe perfluoroalcoxy, à condition que l'un au moins des groupes R¹ à R⁴ représente un atome d'halogène, un groupe perfluoroalkyle ou un groupe perfluoroalcoxy,
et comprenant au moins un motif répétitif de formule (II) suivante : 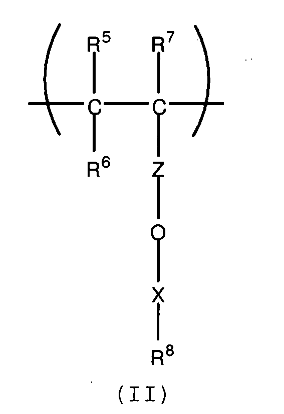 dans laquelle :
- R⁵, R⁶, R⁷ représentent, indépendamment l'un de l'autre, un atome d'hydrogène, un groupe alkyle ;
- Z est une liaison simple ou un groupe alkylène ;
- X est un groupe alkylène ou perfluoralkylène ; et
- R⁸ est un groupe carbonate cyclique,
ledit procédé consistant en un procédé de polymérisation radicalaire comprenant une étape de polymérisation en présence d'un amorceur de radicaux libres et d'au moins un monomère de formule (X) suivante : 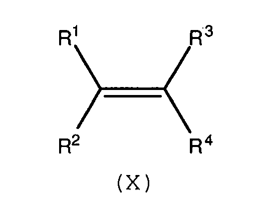 et d'au moins un monomère de formule (XI) suivante : 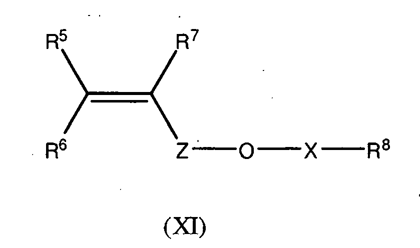 dans lesquelles les R¹, R², R³, R⁴, R⁵, R⁶, R⁷, R⁸, X et Z sont tels que définis ci-dessus.

13. Membrane comprenant au moins un copolymère tel que défini selon l'une quelconque des revendications 1 à 11.

14. Générateur au lithium comprenant au moins une cellule électrochimique, chacune d'elles comprenant au moins une membrane telle que définie à la revendication 13 disposée entre une électrode positive et une électrode négative.

## Patentansprüche

1. Kopolymer, umfassend wenigstens ein sich wiederholendes Motiv der nachfolgenden Formel (I): 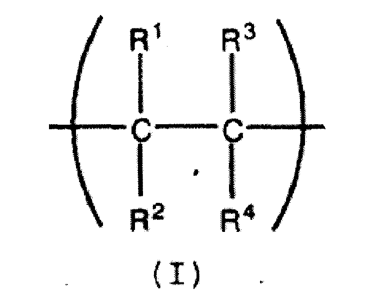 wobei:
- R¹, R², R³ und R⁴ unabhängig voneinander ein Wasserstoffatom, ein Halogenatom, eine Perfluoralkylgruppe oder eine Perfluoralkoxigruppe darstellen, unter der Voraussetzung, dass wenigstens eine der Gruppen R¹ bis R⁴ ein Halogenatom, eine Perfluoralkylgruppe oder eine Perfluoralkoxigruppe darstellt,
und umfassend wenigstens ein sich wiederholendes Motiv der nachfolgenden Formel (II): 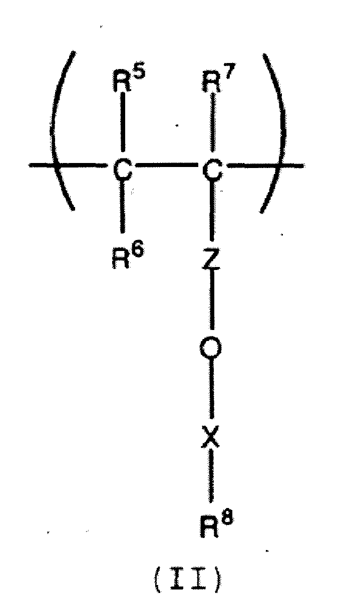
wobei:
- R⁵, R⁶, R⁷ unabhängig voneinander ein Wasserstoffatom, eine Alkylgruppe darstellen;
- Z eine einfache Bindung oder eine Alkylengruppe ist;
- X eine Alkylengruppe oder eine Perfluoralkylengruppe ist; und
- R⁸ eine zyklische Karbonatgruppe ist.

2. Kopolymer nach Anspruch 1, bei dem hinsichtlich des sich wiederholenden Motivs der Formel (I) wenigstens zwei der Gruppen R¹ bis R⁴ Fluoratome darstellen.

3. Kopolymer nach Anspruch 1 oder 2, bei dem R¹ bis R⁴ Fluoratome darstellen.

4. Kopolymer nach Anspruch 1 oder 2, bei dem hinsichtlich des sich wiederholenden Motivs der Formel (I) drei der Gruppen R¹ bis R⁴ ein Fluoratom darstellen, wohingegen die vierte Gruppe ein Wasserstoffatom, ein anderes Halogenatom als Fluor, eine Perfluoralkylgruppe oder eine Perfluoralkoxigruppe darstellen.

5. Kopolymer nach Anspruch 4, bei dem hinsichtlich des sich wiederholenden Motivs der Formel (I) R¹ bis R³ ein Fluoratom darstellen, und R⁴ ein Wasserstoffatom, ein Chloratom, eine Perfluormethylgruppe, eine Perfluormethoxigruppe, eine Perfluorethoxigruppe oder eine Perfluorpropoxigruppe darstellt.

6. Kopolymer nach einem der vorhergehenden Ansprüche, bei dem Z eine einfache Bindung ist, in welchem Fall das sich wiederholende Motiv der Formel (II) der nachfolgenden Formel (VI) genügt: 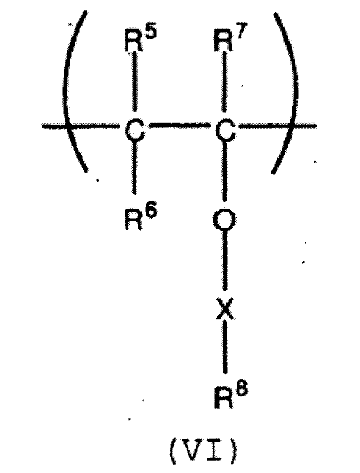 wobei R⁵, R⁶, R⁷, R⁸ und X wie in Anspruch 1 definiert sind.

7. Kopolymer nach einem der vorhergehenden Ansprüche, bei dem R⁸ einer der nachfolgenden Formeln (III) oder (IV) genügt:

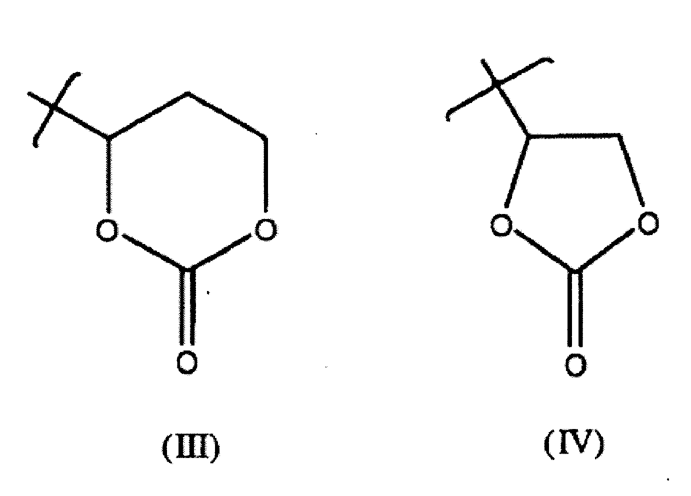

8. Kopolymer nach einem der vorhergehenden Ansprüche, bei dem hinsichtlich des sich wiederholenden Motivs der Formel (II) R⁵ bis R⁷ ein Wasserstoffatom darstellen, und X eine Alkylengruppe ist.

9. Kopolymer nach einem der vorhergehenden Ansprüche, umfassend als sich wiederholendes Motiv der Formel (II) ein sich wiederholendes Motiv, welches einer der nachfolgenden Formeln (VIII oder IX) genügt:

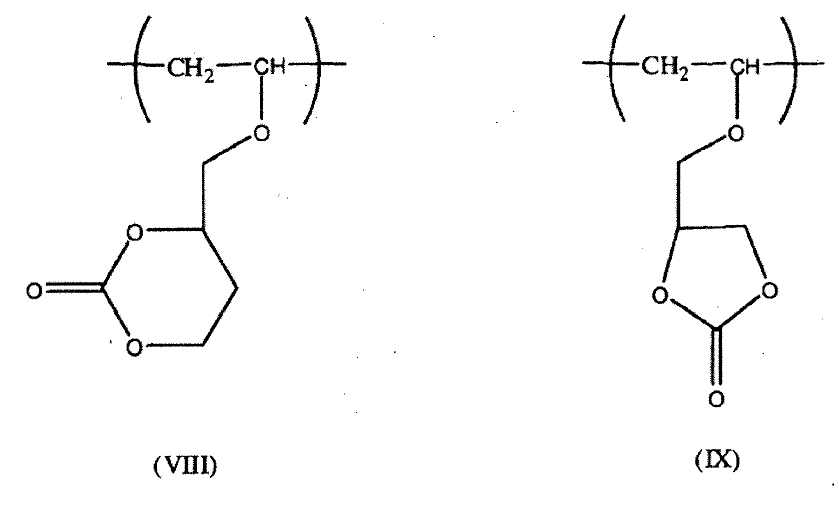

10. Kopolymer nach einem der vorhergehenden Ansprüche, umfassend als besonderes sich wiederholendes Motiv der Formel (I) wenigstens ein sich wiederholendes Motiv der nachfolgenden Formel (V): 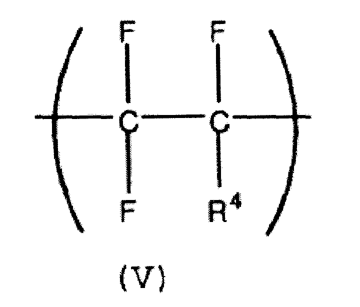 wobei R⁴ ein Chloratom, eine Perfluormethylgruppe oder eine Perfluormethoxigruppe darstellt;
und
als besonderes sich wiederholendes Motiv der Formel (II) wenigstens ein sich wiederholendes Motiv der nachfolgenden Formel (IX):

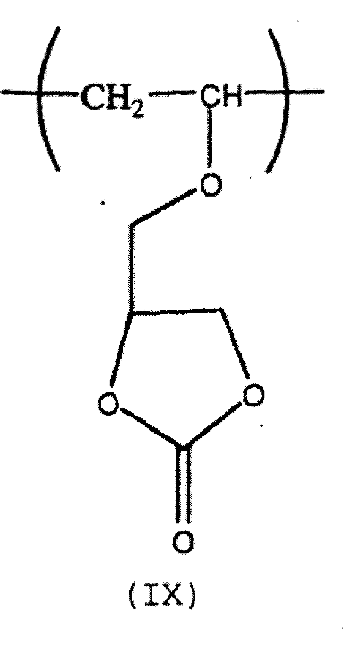

11. Kopolymer nach einem der vorhergehenden Ansprüche, das ein alternierendes Kopolymer ist.

12. Verfahren zur Herstellung eines Kopolymers, umfassend wenigstens ein sich wiederholendes Motiv der nachfolgenden Formel (I): 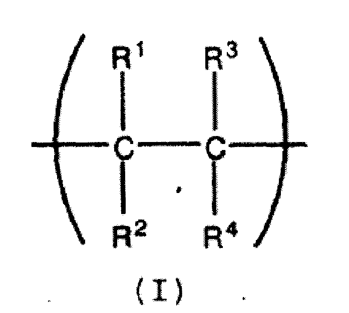 wobei:
- R¹, R², R³ und R⁴ unabhängig voneinander ein Wasserstoffatom, ein Halogenatom, eine Perfluoralkylgruppe oder eine Perfluoralkoxigruppe darstellen, unter der Voraussetzung, dass wenigstens eine der Gruppen R¹ bis R⁴ ein Halogenatom, eine Perfluoralkylgruppe oder eine Perfluoralkoxigruppe darstellt,
und umfassend wenigstens ein sich wiederholendes Motiv der nachfolgenden Formel (II): 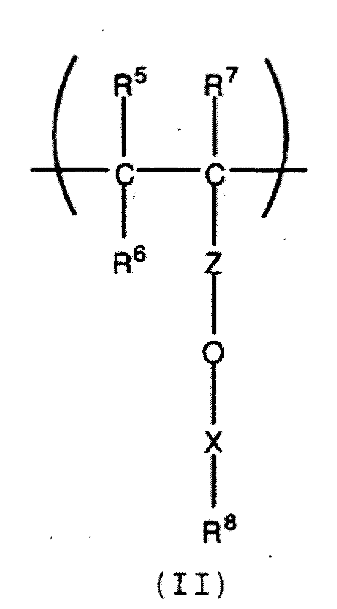
wobei:
- R⁵, R⁶, R⁷ unabhängig voneinander ein Wasserstoffatom, eine Alkylgruppe darstellen;
- Z eine einfache Bindung oder eine Alkylengruppe ist;
- X eine Alkylengruppe oder eine Perfluoralkylengruppe ist; und
- R⁸ eine zyklische Karbonatgruppe ist,
wobei das Verfahren ein radikalisches Polymerisationsverfahren umfaßt, das einen Schritt der Polymerisation in Anwesenheit eines Starters für freie Radikale und wenigstens eines Monomers der nachfolgenden Formel (X) enthält: 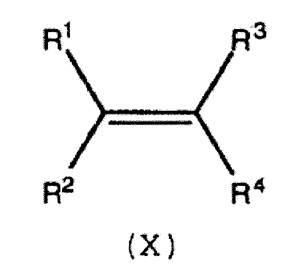 sowie wenigstens eines Monomers der nachfolgenden Formel (XI): 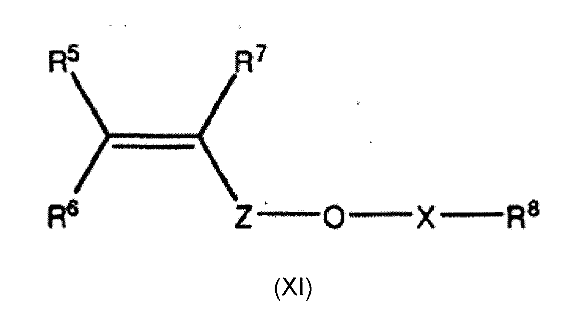 wobei die R¹, R², R³, R⁴, R⁵, R⁶, R⁷, R⁸, X und Z so wie oben definiert sind.

13. Membran, umfassend wenigstens ein Kopolymer wie in einem der Ansprüche 1 bis 11 definiert.

14. Lithiumgenerator, umfassend wenigstens eine elektrochemische Zelle, von denen jede wenigstens eine Membran wie in Anspruch 13 definiert enthält, die zwischen einer positiven Elektrode und einer negativen Elektrode angeordnet ist.

## Claims

1. Copolymer comprising at least one repetitive unit having the following formula (I): 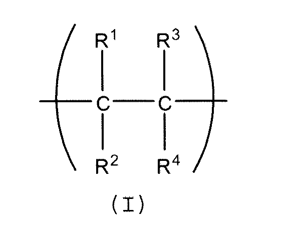 in which:
- R¹, R², R³, and R⁴ represent, independently of one another, a hydrogen atom, a halogen atom, a perfluoroalkyl group or a perfluoroalkoxy group, provided that at least one of the R¹ - R⁴ groups represents a halogen atom, a perfluoroalkyl group, or a perfluoroalkoxy group,
and comprising at least one repetitive unit having the following formula (II): 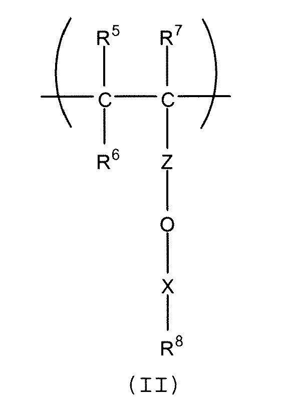 in which:
- R⁵, R⁶, R⁷ represent, independently of one another, a hydrogen atom, an alkyl group;
- Z is a single bond or an alkylene group;
- X is an alkylene group or a perfluoroalkylene group; and
- R⁸ is a cyclic carbonate group.

2. Copolymer according to claim 1, in which, with regard to the repetitive unit of formula (I), at least two of the groups R¹ - R⁴ represent fluorine atoms.

3. Copolymer according to claim 1 or 2, in which R¹ - R⁴ represent fluorine atoms.

4. Copolymer according to claim 1 or 2, in which, with regard to the repetitive unit of formula (I), three of the R¹ - R⁴ represent a fluorine atom, whilst the fourth group represents a hydrogen atom, a halogen atom other than fluorine, a perfluoroalkyl group, or a perfluoroalkoxy group.

5. Copolymer according to claim 4, in which, with regard to the repetitive unit of formula (I), R¹ - R³ represent a fluorine atom, and R⁴ represents a hydrogen atom, a chlorine atom, a perfluoromethyl group, a perfluoromethoxy group, a perfluoroethoxy group, or a perfluoropropoxy group.

6. Copolymer according to any of the foregoing claims, in which Z is a single bond, in which case the repetitive unit of formula (II) corresponds to formula (VI) below: 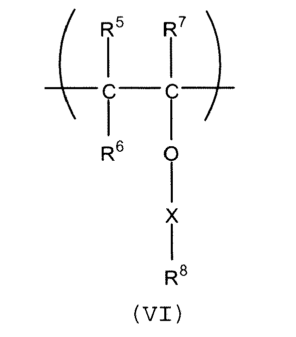 in which R⁵, R⁶, R⁷, R⁸, and X are as defined in claim 1.

7. Copolymer according to any of the foregoing claims, in which R⁸ corresponds to one of formulae (III) or (IV) below:

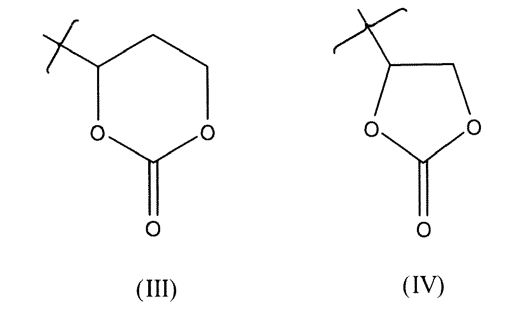

8. Copolymer according to any of the foregoing claims, in which, with regard to the repetitive unit of formula (II), R⁵ - - R⁷ represent a hydrogen atom, and X is an alkylene group.

9. Copolymer according to any of the foregoing claims, comprising a repetitive unit corresponding to one of formulae (VIII) or (IX) below as a repetitive unit of formula (II):

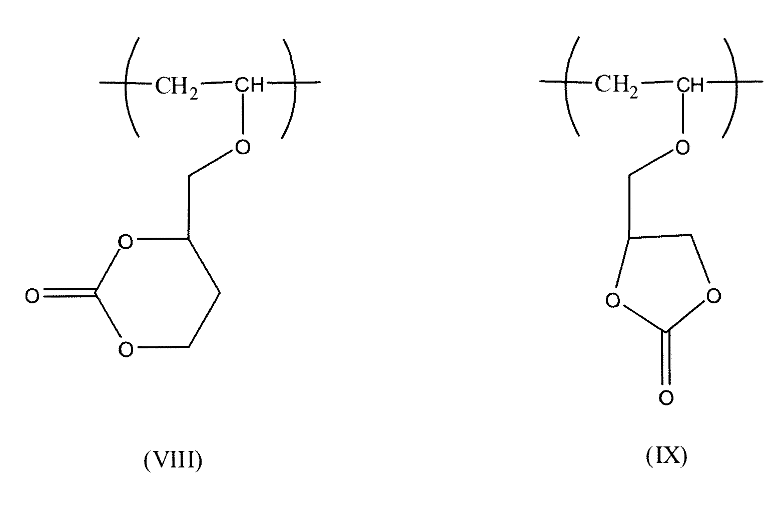

10. Copolymer according to any of the foregoing claims, comprising, as a particular repetitive unit of formula (I), at least one repetitive unit having formula (V) below: 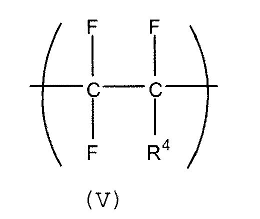 in which R⁴ represents a chlorine atom, a perfluoromethyl group, or a perfluoromethoxy group, and and at least one repetitive unit of formula (IX) below as a particular repetitive unit of formula (II):

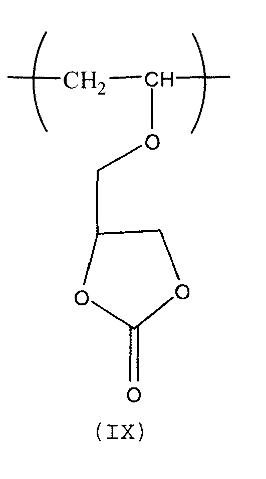

11. Copolymer according to any of the foregoing claims, which is an alternating copolymer.

12. Method for preparing a copolymer comprising at least one repetitive unit having the following formula (I): 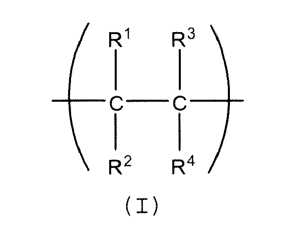 in which:
- R¹, R², R³, and R⁴ represent, independently of one another, a hydrogen atom, a halogen atom, a perfluoroalkyl group or a perfluoroalkoxy group, provided that at least one of the R¹ - R⁴ groups represents a halogen atom, a perfluoroalkyl group, or a perfluoroalkoxy group,
and comprising at least one repetitive unit having the following formula (II): 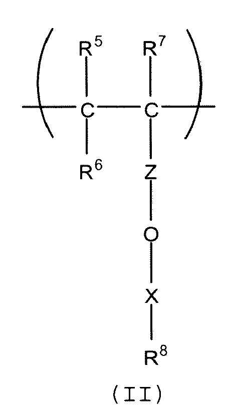 in which:
- R⁵, R⁶, R⁷ represent, independently of one another, a hydrogen atom, an alkyl group;
- Z is a single bond or an alkylene group;
- X is an alkylene or perfluoroalkylene group; and
- R⁸ is a cyclic carbonate group,
said process consisting in a radical polymerisation method comprising a step of polymerisation in the presence of a free radical initiator and at least one monomer of formula (X) below: 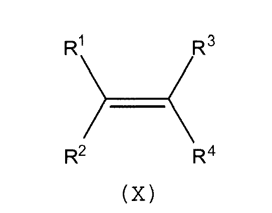 and at least one monomer of formula (XI) below: 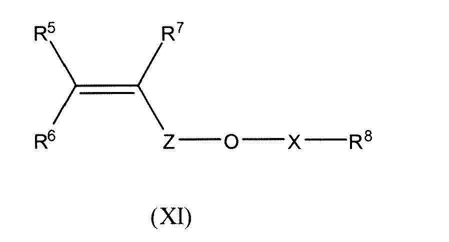 in which R¹, R², R³, R⁴, R⁵, R⁶, R⁷, R⁸, X, and Z are as defined above.

13. Membrane comprising at least one copolymer as defined in any of claims 1 - 11.

14. Lithium generator comprising at least one electrochemical cell, each of them comprising at least one membrane as defined in claim 13, arranged between a positive and negative electrode.
